# EUROPEAN PATENT SPECIFICATION

(11) **EP 0 356 686 B1**
(45) Date of publication and mention of the grant of the patent: **17.02.1993**
(21) Application number: 89113221.9
(22) Date of filing: 19.07.1989
(51) Int. Cl.: E01F 15/00, F16F 7/12

(54) **Guardrail barrier**
Leitplankenanordnung
Barrière de sécurité à glissière

(30) Priority: 03.08.1988 IT 1253288; 24.02.1989 IT 1243289
(43) Date of publication of application: 07.03.1990
(73) Proprietor: METALMECCANICA FRACASSO S.p.A., I-30032 Fiesso d'Artico (Venezia) (IT)
(72) Inventor: Cicinnati, Luigi, I-35100 Padova (IT); Fracasso, Adriano, I-30032 Fiesso D'Artico (IT)
(74) Representative: Porsia, Dino, Dr.

(56) References cited:
- AT-B- 372 445
- CH-A- 467 391
- DE-A- 1 937 079
- DE-A- 2 461 942
- DE-A- 2 513 436
- DE-A- 2 642 475
- DE-B- 1 276 678
- DE-B- 1 295 582
- DE-U- 1 928 555
- FR-A- 1 584 411
- GB-A- 1 237 198
- US-A- 3 284 054
- US-A- 3 417 965
- US-A- 3 981 486
- US-A- 4 655 434
- US-A- 4 838 523
- CIVIL ENGINEERING CONSTRUCTION EQUIPMENT DIGEST, vol. 6, no. 4, April 1967, page 50

## Description

The invention relates to metallic guardrail barriers. In case of crash, the barriers of known type are distorted in a manner that cannot be foreseen and the ribbon or rail thereof will be often bent transversely with outward rotation of its upper portion, thus forming an inclined plane that can be easily passed over by the vehicle that has struck said barrier.

More particularly, the invention relates, in a guardrail barrier, to a device that can be used for securing the rail of the barrier to the respective posts so as to absorb and dissipate energy in case of crash and so as to maintain said rail in its original orientation whereby it can continue to perform its function properly.

Documents DE-A-2 642 475, FR-A-1 584 411 and US-A-3 284 054 describe a metallic guardrail barrier of the type comprising a sustaining post, a spacing member extending parallelly to the ground, secured at one side to the said sustaining post and carrying at the other side a support member to which the rail is secured. The said rail supporting member is mounted on the said spacing element so as to be swingable about a fulcrum parallel to the longitudinal direction of the rail and located at a level not coinciding with the level of the centerline of the rail, suitable shock absorbing means being provided to dampen the swinging movement of the supporting member around the fulcrum, following to impact of a vehicle against the rail, in a manner which is proportional to the intensity of the said impact.

From document US-A-4 655 434 it is known to employ shearing pins or bolts, and areas weakened by slots or holes, in order to provide energy absorbing means in case of an impact of a vehicle against a guardrail barrier.

According to the invention, there is provided a metallic guardrail barrier of the type comprising a sustaining post, a spacing member extending parallel to the ground, secured at one side to the said sustaining post and carrying at the other side a supporting member to which the rail is secured, the said supporting member being mounted on the said spacing member so as to be swingable about a fulcrum parallel to the longitudinal direction of the rail and located at a level not coinciding with the level of the centerline of the rail, shock absorbing means being provided to dampen the swinging movement of the supporting member around the fulcrum, following to impact of a vehicle against the rail.

The guardrail barrier of the above mentioned type is characterized by the fact that said shock absorbing means comprises a pin which connects the said supporting member to the said spacing member at a distance from the said fulcrum and which is arranged to tear a region weakened by holes located on said supporting member or on said spacing member, that the supporting member for the rail includes a front wall for securing said rail and a side member having a downwardly diverging shape, said side member having an upper portion in which said fulcrum is located and a lower portion, that said spacing member includes a flat wing which is cantilever mounted to said sustaining post at one side and at another side is connected to said upper portion of the side member by said fulcrum and to said lower portion of the side member by the said pin, and that said weakened region has a curved outline having a centerpoint at said fulcrum, said holes being spaced from one another and arranged in a curved row along said weakened region, with said pin passing through one of said holes at an end of said row.

The characterizing features of the invention and the advantages resulting therefrom will be apparent from the following description of some preferred embodiments thereof, shown by way of non-limiting examples in the Figures of the accompanying drawings, in which:
Figures 1 and 2 are diagrammatic perspective views of two possible embodiments of the device according to the invention, shown in a rest condition and not provided with the steel rail;
Figure 3 is a side elevational view of the road barrier provided with the device of the invention and shown with full lines in the rest condition and with dotted lines in the distorted condition after a crash;
Figure 4 shows further details of the device according to the invention, on the line IV-IV of Figure 3;
Figures 5, 6, 7 and 8 show, in a development on a plane, some possible embodiments of the weakened regions of the connection system of the energy-absorption and dissipation type applied to the device of the invention;
Figures 9 and 10 are a perspective and a side elevational view, respectively, of another embodiment of the device according to the invention;
Figure 11 is a side elevational view of the spacing member of the device shown in Figures 9 and 10;
Figures 12 and 13 show the spacing member of Fig. 11 in a sectional view on the line XII-XII of Figure 11 and in plan view, respectively;
Figures 14, 15, 16 and 17 are side elevational views of the device of Figures 9 and 10 in some significant steps of the deformation sequence to which said device may be submitted

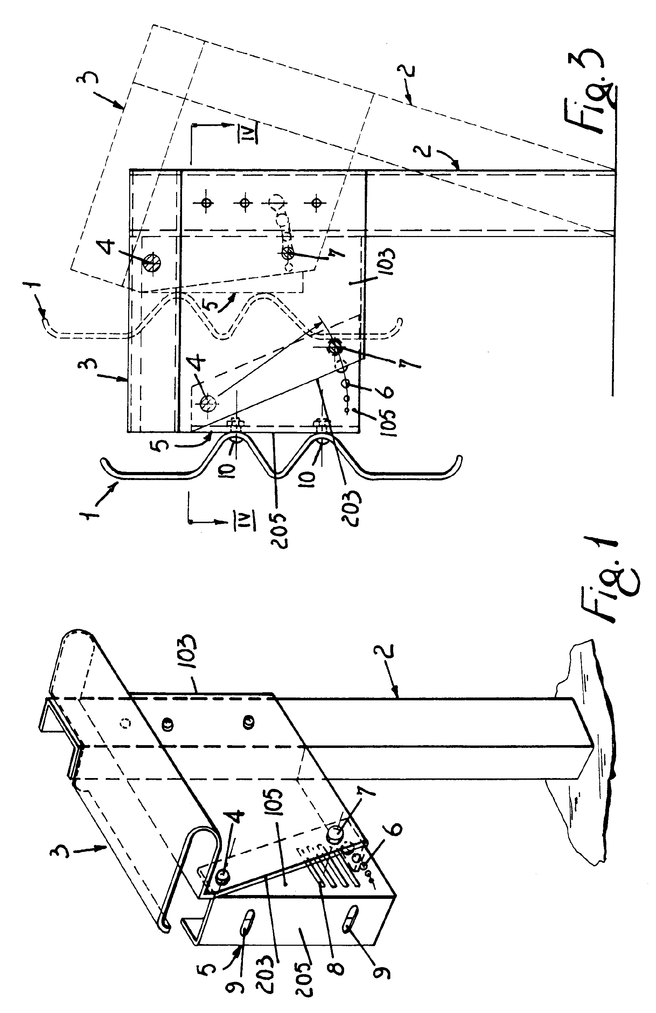

In Figures 1, 3 and 4, the reference numeral 1 indicates the steel ribbon or rail of the road barrier which may also have a different profile. The numeral 2 indicates one of the posts which sustain the rail 1 in place, and the numeral 3 indicates a spacing element secured in cantilever fashion to the top portion of the post and supporting the rail 1 at the opposite end thereof. The spacing element 3 is made of metal and comprises at least one lateral flat wing 103 directed downwards vertically. The wing 103 has a lower side which is shorter than its upper side, so that the front side 203 is suitably inclined. At the top portion of said front side of the wing 103, there is pivoted at 4, for example by means of a bolt or rivet, the top portion of the flat side member 105 of a supporting member 5 made of metal plate of suitable thickness. The side member 105 has a downwardly diverging, e.g. trapezoidal, outline so that a portion thereof will be in contact over the entire height of the wing 103, and a portion thereof of progressively downwardly increasing width will protrude from the side 203 of said wing.

The lower portion of the side member 105 is connected to the wing 103 through a shock-absorbing, energy-recovering and dissipation system constructed as follows. In the lower portion of the side member 105 there is provided a weakened region having the outline of a circle sector with centerpoint at the fulcrum 4, said region being formed by a plurality of holes 6 of suitable diameter, either differentiated or constant (see below) and suitably spaced from one another. The end hole 6 that is located opposite the wing 103 is engaged by a bolt, a pin, a rivet or any other suitable connecting or coupling element 7 which is fixed to said wing 103. In Fig. 1, the numeral 8 indicates optional stiffening ribs for the side member 105.

The supporting member 5, has in plan view, for example, a U-shaped outline and is provided, in its front wall 205, with slots 9 to which the rail 1 of the barrier can be fixed by conventional means 10. When the barrier is in its normal operative condition, the front side 205 of the supporting member 5 is in a vertical or substantially vertical position.

The above described device operates as follows.

When the rail 1 is struck by a motor-vehicle, the component acting perpendicularly against said rail subjects the barrier to the following distortion, with resulting energy absorption by said barrier. The sustaining post 2 tends to be bent outwards, with rotation about its anchorage region, as shown with dotted lines in Fig. 3. The rail 1 would tend consequently to become inclined transversely upwards as occurring in the known art. By adopting the device of the present invention, a portion of the impact energy is absorbed by the supporting member 5, which rotates about the fulcrum 4 so that the coupling lower member 7 will break in a progressive, controlled and pre-established manner the diaphragms of the side member 105 which are located between the weakening holes 6, the whole being calculated in such a manner that, proportionally to the bending of the post 2, the supporting member 5 will be rotated outwards to such an extent as to maintain the rail 1 substantially in the original position that is the most suitable to restrain the vehicle which caused the deformation (see the portions shown with dotted lines in Fig. 3).

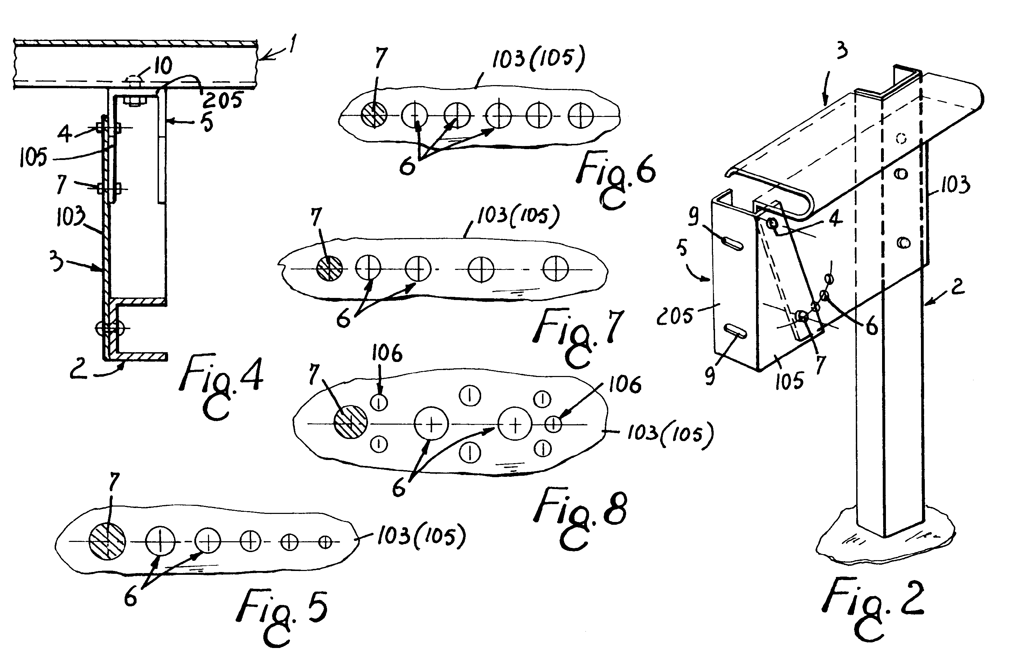

Depending upon the energy-absorption requirements upon the crash, the holes 6 may have decreasing dimensions as shown in Figure 5, or a constant dimension as shown in Figures 6, 7 and 8. The spacing between the holes 6 may be either constant as from Figs. 5, 6, 8, or it may be different, i.e. increasing as in Figure 7, or decreasing. In Figure 8 there is shown a further modification, in which, in the spaces or diaphragms located between a hole 6 and the next one, there may be provided further weakening holes 106 in any suitable arrangement.

Figure 2 shows a modified construction wherein the connecting or coupling element 7 is fixed to the side member 105, while the region which is weakened by the holes 6 is provided on the wing 103.

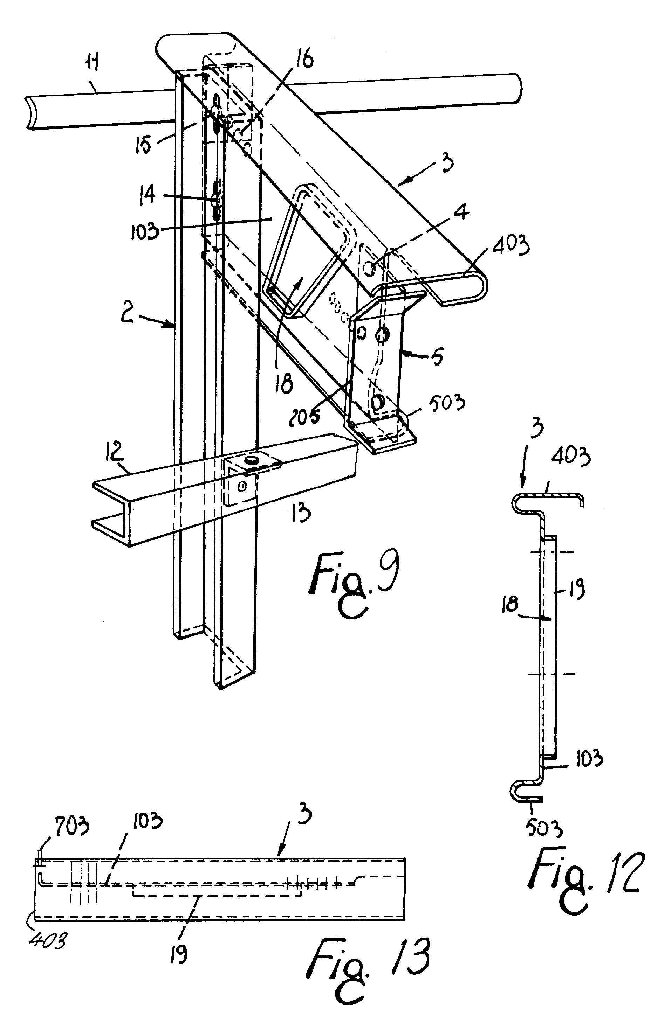

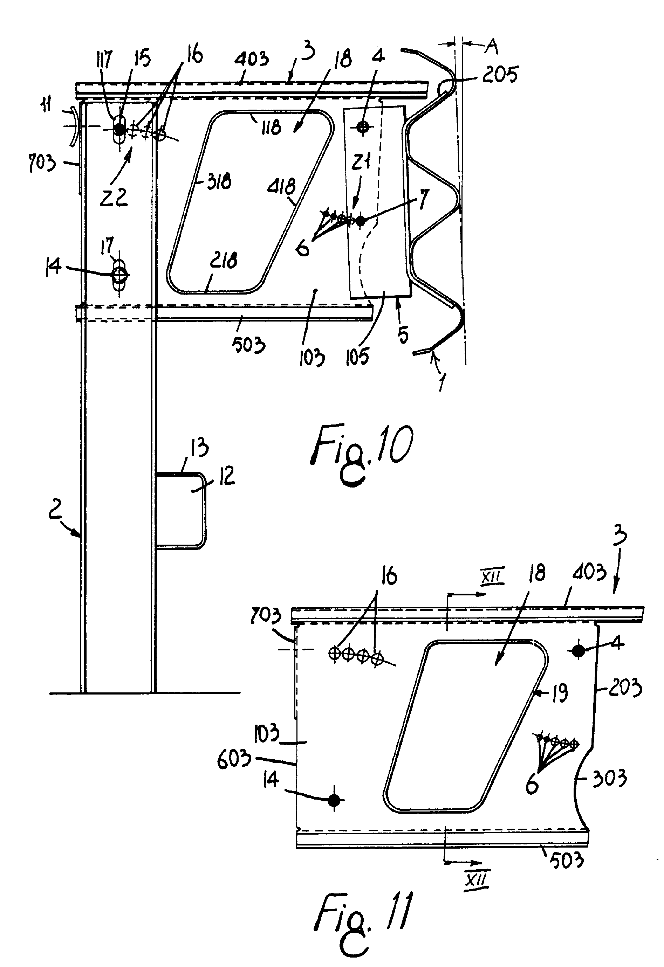

With particular reference to Figures 9 to 17, there will be now described another embodiment of the device according to the invention. The scope of the modified embodiment is to amplify the dynamic reaction of said device, whereby it can operate with the maximum capacity of recovering and dissipating the kinetic energy of the colliding motor-vehicle and to react in such a manner that the guardrail will be raised to an extent which is directly proportional to the intensity of the collision, to match the different characteristics of said colliding motor-vehicle. This object is achieved by connecting the spacing member to the sustaining post so that it may be oscillated upwards and with the interposition of an energy shock-absorbing and dissipating system, similar to that which connects the supporting member for the barrier guardrail to said spacing member. Moreover, the spacing member is shaped so as to be bent upwards in case of a very strong crash, to cause a further raising of the barrier guardrail.

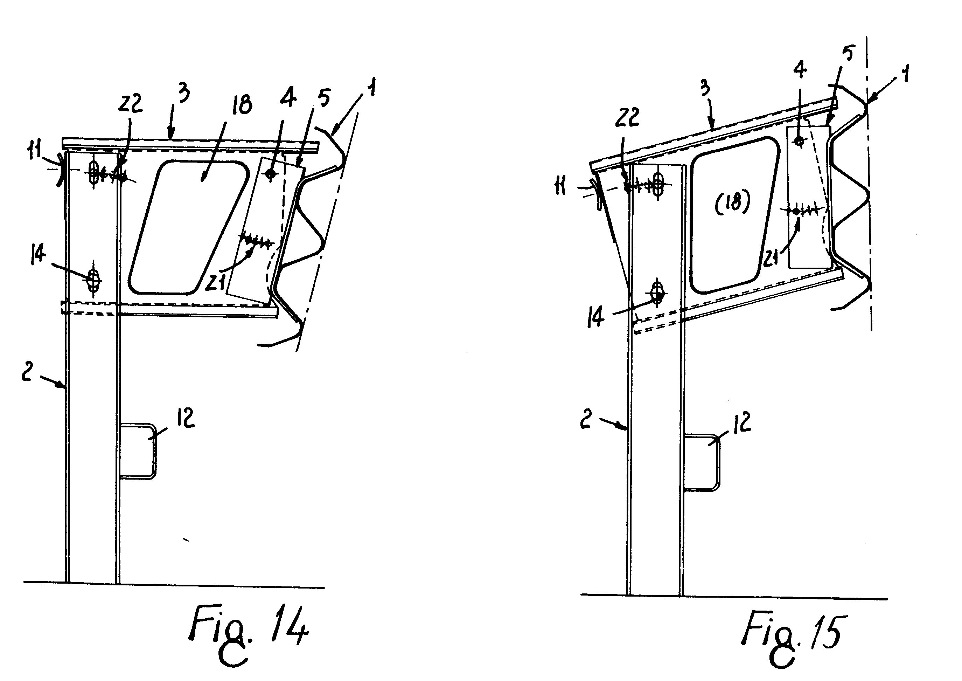

Referring firstly to Figures 9 to 13, reference numeral 1 indicates the guardrail of the road barrier, supported at its rear side by the suitably shaped wing portion 205 of a square angle support 5 which by the other flat wing 105 thereof is mounted beside one end of the flat body of the spacing member 3, the other end of which is fixed, as further explained below, to the top portion of the sustaining post 2 which is fixed to the ground. When the device is in its rest position, as in Figure 2, the rail 1 is arranged transversely on a vertical plane or is inclined transversely with a setback of suitable amplitude upwards, so as to form an angle A of a few degrees with the imaginary vertical plane. As appearing in the detail views of Figures 11, 12 and 13, the upper and lower sides of the spacing member 3 are substantially of C-shape, as indicated at 403 and 503, respectively, so as to constitute stiffening ribs. The front side 203 of the spacing member is inclined backwards in the downward direction and is provided with a lower recess 303 for a purpose to be specified below. The rear side 603 of the spacing member is provided in the upper portion thereof with an integral squarely-bent wing 703 to which a C-shaped beam 11 may be secured, said beam being arranged on the outer side of the sustaining post 2 and connecting all the spacing members of the various supporting devices for the guardrail 1, so as to distribute to the adjoining devices the stresses imposed to each device upon the collision of a motor-vehicle against the guardrail 1. For the same reason, and also to avoid any dangerous interference of the forecarriage of a colliding vehicle with the sustaining posts 2, said sustaining posts are interconnected, at a suitable height above the ground, by means of a beam 12 which is secured in place by means of suitable brackets 13 or any other suitable means.

The sustaining post 2 has a U-shaped cross section, but it may be of any other suitable profile (see below).

The wing 105 of said support 5 is connected to the body of the spacing member 3 by means of a shock-absorbing system Z1 in which the top portion of said wing 105 is pivoted to the body 103 by means of a pin 4 or any other means whereby the support 5 may be oscillated about an axis which is parallel to the longitudinal axis of the rail 1. The lower portion of the wing 105 is secured to said body 103 by means of a pin or any other suitable element 7 which, in case of a crash of a motor-vehicle against the rail 1, is oscillated outwards as shown in Fig. 14, thus tearing a corresponding area of the body 103 which has been weakened by holes 6.

The body 103 of the spacing member 3 is connected to the sustaining post 2 through a shock-absorbing system Z2 similar to the system Z1 which connects the support 5 to said spacing member, but the system Z2 is turned upside down so that in case of crash of considerable strength said spacing member will be oscillated upwards. The lower rear portion of the body 103 is pivoted to the sustaining post 2 by means of a pin 14 which is parallel to said pin 4, while the upper rear portion thereof is secured to said post by means of a further pin 15 which in case of crash of considerable intensity against the rail 1 will tear an area of the body 103, said area having been weakened by holes 16, while the spacing member 3 is oscillated upwards. Since the post 2, generally, is installed in place at a prior time, it is provided with longitudinal slots 17-117 for receiving said pins 14-15, so as to permit to the post itself to match accurately the other portions constituting the device of the invention. The design characteristics of the shock-absorbing system Z2 may be such as to let it become operative either after or before the system Z1, or in combination therewith. Figure 15 shows that when both shock-absorbing systems Z1, Z2 have carried out their functions, the rail 1 will be suitably elevated with respect to the original position while maintaining, transversely, a substantial vertical position.

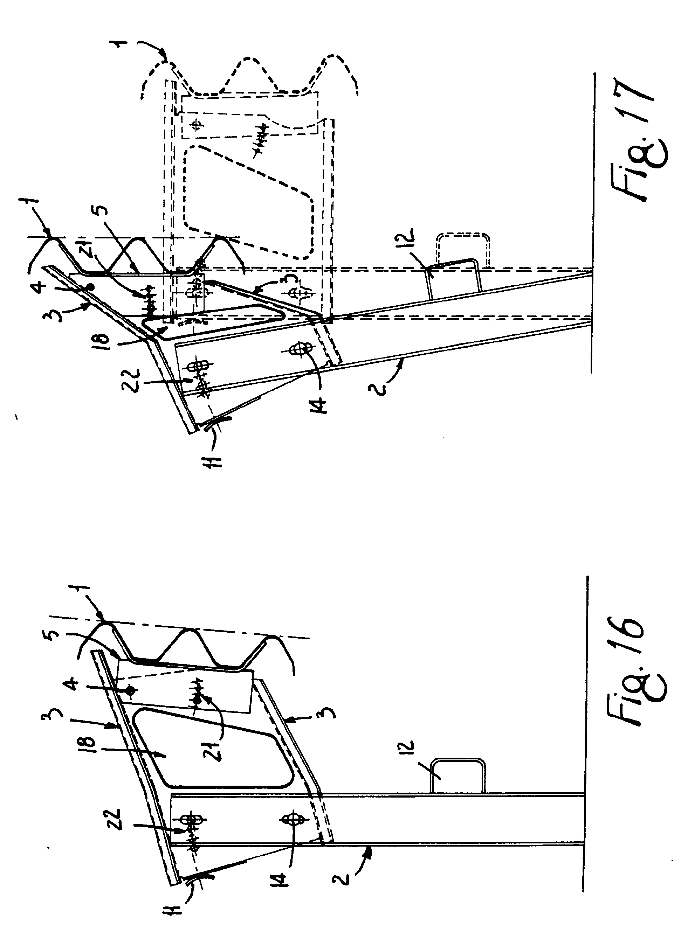

Still with reference to Figures 9 to 13, it is to be noted that the body 103 of the spacing member, in the region between the support 5 and the sustaining post 2, is provided with a polygonal window 18 framed by a stiffening rim 19, projecting towards the post. In the present case, said window 18 has a polygonal outline with two sides 118-218 which are parallel and adjacent to the ribbed upper and lower sides of the spacing member 3, while the other two sides 318 and 418 are inclined such as to form acute internal angles respectively of increasing amplitude upon incidence with the imaginary vertical plane passing through their lower vertex. The angle regions of the window 18 are suitably rounded. It is to be understood that said window 18 may be of any other shape provided that said shape is such as to ensure that when the rail 1 of the barrier is submitted to a considerably strong crash, after the shock absorbing systems Z1-Z2 have performed their function, the spacing member 3 is deflected upwards by oscillating about virtual fulcrums which are located, for example, near the ends of the rear side 318 of the window 18, as shown in the detail view of Figure 16 and with a further raising of the guardrail 1. If the crash is particularly strong, the sustaining post 2 is also bent outwards about a fulcrum in the region adjacent to the ground, while the spacing member 3 is flexed further upwards as shown in the detail view of Figure 17. From this Figure, it is apparent that in case of a very strong crash, such as caused by a trailer-truck, all the components of the device will be distorted, thus recovering and dissipating energy, and will cause a considerable raising of the guardrail 1 with respect to the original position shown with dotted lines. The barrier has thus performed a self-adaptation for holding a motor-vehicle even though the latter has a center of gravity much above the ground. From Figure 17 it appears as well that the presence of the beam 12 avoids any dangerous interference of a motor-vehicle against the posts 2.

## Claims

1. A metallic guardrail barrier of the type comprising a sustaining post (2), a spacing member (3) extending parallel to the ground, secured at one side to the said sustaining post (2) and carrying at the other side a supporting member (5) to which the rail (1) is secured, the said supporting member (5) being mounted on the said spacing member (3) so as to be swingable about a fulcrum (4) parallel to the longitudinal direction of the rail (1) and located at a level not coinciding with the level of the centerline of the rail (1), shock absorbing means (6, 7) being provided to dampen the swinging movement of the supporting member (5) around the fulcrum (4), following impact of a vehicle against the rail (1), in a manner which is proportional to the intensity of the said impact, characterized by the fact that said shock absorbing means comprises a pin (7) which connects the said supporting member (5) to the said spacing member (3) at a distance from the said fulcrum (4) and which is arranged to tear a region weakened by holes (6) located on said supporting member or on said spacing member,
that the supporting member (5) for the rail (1) includes a front wall (205) for securing said rail and a side member (105) having a downwardly diverging shape, said side member (105) having an upper portion in which said fulcrum (4) is located and a lower portion, that said spacing member (3) includes a flat wing (103) which is cantilever mounted to said sustaining post (2) at one side and at another side is connected to said upper portion of the side member (105) by said fulcrum (4) and to said lower portion of the side member (105) by the said pin (7), and that said weakened region has a curved outline having a centerpoint at said fulcrum (4), said holes (6) being spaced from one another and arranged in a curved row along said weakened region, with said pin (7) passing through one of said holes (6) at an end of said row.

2. A guardrail barrier according to claim 1, characterized by the fact that the said spacing member (3) is connected to said sustaining post (2) so as to be swingable about a second lower fulcrum (14) under the control of a second shock absorbing means (Z2), said second shock absorbing means including a second weakened region (16) on said spacing member (3) at a location spaced from said second fulcrum (14) and a second pin (15) which connects said spacing member (3) and said sustaining post (2), and passes through said second weakened portion, such that said second pin (15) causes a tearing of said second weakened region (16) when said rail (1) is impacted by a vehicle and said spacing member (3) moves about said second fulcrum (14).

3. A guardrail barrier according to claim 2, characterized by the fact that said spacing member (3) is formed by a substantially rectangular plate, with upper and lower sides suitably shaped to constitute stiffening ribs (403, 503) and with a front side (203) inclined backwards in the downward direction.

4. A guardrail barrier according to claim 3 characterized by the fact that the said front side (203) of the plate forming the spacing member (3) is provided with a recess (303) in the lower portion thereof.

5. A guardrail barrier according to claim 2, characterized by the fact that the sustaining post (2) is provided with an upper slot (117) and a lower slot (17), and the spacing member (3) is secured to the sustaining post (2) by the said second pin (15) which extends through said upper slot (117) and by a fulcrum pin (14) which extends through said lower slot (17).

6. A guardrail barrier according to claim 1, characterized by the fact that said spacing member (3) is provided, on its vertical outer side, with an integral lug (703) to which there is secured a beam (11) arranged on the outer side of the post (2) and which interconnects the various devices which support the rail (1).

7. A guardrail barrier according to claim 1, characterized by the fact that the posts (2) for the various rail supporting devices are interconnected by an intermediate beam (12) arranged on the inner side of said posts.

8. A guardrail barrier according to claim 1, characterized by the fact that the spacing member (3) includes a window (18) therein formed having a peripheral rim (118), comprising oblique sides (318-418) and shaped so that in case of a particularly strong crash said window collapses and the spacing member is flexed upwards.

## Patentansprüche

1. Leitplankenanordnung aus Metall mit einem Stützpfosten (2) und einem Distanzstück (3), das sich parallel zum Untergrund erstreckt und das an einer Seite mit dem Stützpfosten (2) verbunden ist und das an der anderen Seite ein Tragelement (5) trägt, mit dem die Leitschiene (1) fest verbunden ist und bei der das Tragelement (5) so an dem Distanzstück (3) befestigt ist, daß es schwenkbar um einen Drehpunkt (4) ist, der parallel zur Längsrichtung der Leitschiene (1) ist und der auf einer Höhe angeordnet ist, die nicht mit der Höhe der Leitschienenmittellinie übereinstimmt und bei der eine Stoßabsorptionseinrichtung (6,7) vorgesehen ist, um die Schwenkbewegung des Tragelements (5) um den Drehpunkt (4) zu dämpfen, die als Folge eines Fahrzeugaufpralls und proportional zur Stärke des Aufpralls gegen die Leitschiene (1) auftritt, **dadurch gekennzeichnet,** daß die Stoßabsorptionseinrichtung (6,7) einen Stift (7) aufweist, der das Tragelement (5) mit dem Distanzstück (3) in einem Abstand von dem Drehpunkt (4) verbindet und der dazu dient, einen Bereich zu zerreißen, der durch Löcher (6) geschwächt ist und der sich an dem Tragelement (5) oder dem Distanzstück (3) befindet und daß das Tragelement (5) für die Leitschiene (1) eine Vorderwand(205) aufweist, um die Leitschiene (1) zu befestigen und ein Seitenteil (105) hat, das eine nach unten auseinandergehende Form hat und daß das Seitenteil (105) aus einem oberen Abschnitt, in dem sich der Drehpunkt (4) befindet, und einem unteren Abschnitt besteht und daß das Distanzstück (3) einen ebenen Flügel (103) aufweist, der an einer Seite an dem Stützpfosten (2) austragend befestigt ist und an der anderen Seite mit dem oberen Abschnitt des Seitenteils (105) durch den Drehpunkt (4) und mit dem unteren Abschnitt des Seitenteils (105) durch den Stift (7) verbunden ist und daß der geschwächte Bereich eine gekrümmte Kontur mit einem Mittelpunkt hat, der an dem Drehpunkt (4) liegt und daß die Löcher (6) im Abstand voneinander und in einer gekrümmten Reihe entlang des geschwächten Bereichs angeordnet sind, wobei der Stift (7) durch eines der Löcher (6) an einem Ende der Reihe hindurchgreift.

2. Leitplanke nach Anspruch 1, **dadurch gekennzeichnet**, daß das Distanzstück (3) mit dem Stützpfosten (2) derart verbunden ist, daß es um einen zweiten unteren Drehpunkt (14) unter der Führung einer zweiten Stoßabsorptionseinrichtung (Z2) schwenkbar ist, wobei die zweite Stoßabsorptionseinrichtung einen zweiten geschwächten Bereich (16) an dem Distanzstück (3) aufweist, der im Abstand von dem zweiten Drehpunkt (14) angeordnet ist und einen zweiten Stift (15) hat, der das Distanzstück mit dem Stützpfosten (2) verbindet und der durch den zweiten geschwächten Bereich hindurchgreift, so daß der zweite Stift (15) ein Einreißen des zweiten geschwächten Bereichs (16) verursacht, wenn die Leitschiene (1) von einem Fahrzeug beaufschlagt wird und sich das Distanzstück (3) um den zweiten Drehpunkt (14) bewegt.

3. Leitplanke nach Anspruch 2, **dadurch gekennzeichnet**, daß das Distanzstück (3) durch eine im wesentlichen rechteckige Platte gebildet ist, mit oberen und unteren Seiten, die zu Versteifungsrippen (403, 503)ausgeformt sind und mit einer Vorderseite (203), die in der Richtung von oben herab nach hinten geneigt ist.

4. Leitplanke nach Anspruch 3, **dadurch gekennzeichnet**, daß die Vorderseite (203) der Platte, die das Distanzstück (3) bildet, mit einer Aussparung (303) in ihrem unteren Bereich versehen ist.

5. Leitplanke nach Anspruch 2, **dadurch gekennzeichnet**, daß der Stützpfosten (2) mit einem oberen Langloch (117) und einem unteren Langloch (17) versehen ist und daß das Distanzstück (3) mit dem Stützpfosten (2) verbunden ist durch den zweiten Stift (15), der durch das obere Langloch (117) greift, und durch einen Drehpunktstift (14), der durch das untere Langloch (17) greift.

6. Leitplanke nach Anspruch 1, **dadurch gekennzeichnet**, daß das Distanzstück (3) an seiner vertikalen Außenseite mit einem angebauten Lappen (703) versehen ist, an dem ein Riegel (11) befestigt ist, der an der Außenseite des Pfostens (2) angeordnet ist und der die einzelnen Vorrichtungen, die die Leitschiene (1) tragen, miteinander verbindet.

7. Leitplanke nach Anspruch 1, **dadurch gekennzeichnet**, daß die Pfosten (2) für die einzelnen die Schiene tragenden Vorrichtungen durch einen Zwischenträger (12) miteinander verbunden sind, der an der Innenseite der Pfosten (2) angeordnet ist.

8. Leitplanke nach Anspruch 1, **dadurch gekennzeichnet**, daß das Distanzstück (3) ein Fenster (18) aufweist, das einen umlaufenden Rand (118) mit schrägen Seiten (318-418) hat und das so ausgeformt ist, daß das Fenster (189) im Falle eines besonders starken Aufpralls zusammengedrückt wird und das Distanzstück (3) nach oben gebogen wird.

## Revendications

1. Glissière de sécurité métallique du type comprenant un poteau de soutien (2), une entretoise (3) orientée parallèlement au sol, fixée d'un côté au poteau (2) et portant de l'autre côté un support (5) auquel est fixé la glissière proprement dite ou rail (1), le support (5) étant monté sur l'entretoise (3) de manière à pouvoir osciller à la façon d'un levier autour d'un point d'appui (4) dont l'axe est parallèle à la direction longitudinale du rail (1) et est situé à un niveau ne coïncidant pas avec le niveau de l'axe du rail (1), un moyen amortisseur de chocs (6, 7) étant prévu pour amortir le mouvement oscillant du support (5) autour du point d'appui (4) à la suite d'un impact d'un véhicule contre le rail (1), l'amortissement étant proportionnel à l'intensité de l'impact, caractérisée par le fait que le moyen amortisseur de chocs comprend une cheville (7) reliant le support (5) à l'entretoise (3) à distance du point d'appui (4) et agencée pour rompre une région affaiblie par des trous (6), située sur le support ou sur l'entretoise, que le support (5) du rail (1) comporte une paroi frontale (205) pour la fixation du rail et un élément latéral (105) dont la forme diverge vers le bas, cet élément latéral (105) possédant une partie supérieure dans laquelle est situé le point d'appui (4) et une partie inférieure, que l'entretoise (3) comporte une aile plate (103) qui est montée en porte à faux sur le poteau (2) par un côté et dont l'autre côté est relié à la partie supérieure de l'élément latéral (105) par le point d'appui (4) et à la partie inférieure de l'élément latéral (105) par la cheville (7), et que la région affaiblie présente une forme générale courbe dont le centre de courbure est situé au point d'appui (4), les trous (6) étant mutuellement espacés et disposés dans une rangée courbe le long de la région affaiblie et la cheville (7) traversant un des trous (6), situé à une extrémité de cette rangée.

2. Glissière de sécurité selon la revendication 1, caractérisée par le fait que l'entretoise (3) est reliée au poteau de soutien (2) de manière qu'elle puisse osciller à la façon d'un levier autour d'un second point d'appui (14) plus bas, sous le contrôle d'un second moyen amortisseur de chocs (Z2), ce second moyen amortisseur de chocs comportant une seconde région affaiblie (16) située sur l'entretoise (3) à un endroit éloigné du second point d'appui (14), ainsi qu'une seconde cheville (15) qui relie l'entretoise (3) au poteau (2) et traverse la seconde région affaiblie, l'agencement étant tel que la seconde cheville (15) provoque la rupture de la seconde région affaiblie (16) lorsque le rail (1) reçoit l'impact d'un véhicule et que l'entretoise (3) se déplace autour du second point d'appui (14).

3. Glissière de sécurité selon la revendication 2, caractérisée par le fait que l'entretoise (3) est formée par une plaque sensiblement rectangulaire, possédant des côtés supérieur et inférieur conformés de façon appropriée pour constituer des nervures raidisseuses (403, 503), ainsi qu'un côté frontal (203) incliné en arrière de haut en bas.

4. Glissière de sécurité selon la revendication 3, caractérisée par le fait que le côté frontal (203) de la plaque formant l'entretoise (3) est pourvue d'une échancrure (303) dans sa partie inférieure.

5. Glissière de sécurité selon la revendication 2, caractérisée par le fait que le poteau de soutien (2) est pourvu d'une fente supérieure (117) et d'une fente inférieure (17), et l'entretoise (3) est fixée au poteau (2) par la seconde cheville (15), traversant la fente supérieure (117), ainsi que par une cheville d'articulation (14) traversant la fente inférieure (17).

6. Glissière de sécurité selon la revendication 1, caractérisée par le fait que l'entretoise (3) est pourvue, sur son côté extérieur vertical, d'une patte (703) d'un seul tenant avec elle et à laquelle est fixée une poutre (11) disposée sur le côté extérieur du poteau (2) et qui relie entre eux les différents dispositifs supportant le rail (1).

7. Glissière de sécurité selon la revendication 1, caractérisée par le fait que les poteaux (2) pour les différents dispositifs supportant le rail sont reliés entre eux par une poutre intermédiaire (12) disposée sur le côté intérieur des poteaux.

8. Glissière de sécurité selon la revendication 1, caractérisée par le fait que l'entretoise (3) contient une fenêtre (18) dotée d'un rebord périphérique (118) et comprenant des côtés obliques (318-418), la fenêtre étant conformée de manière que dans le cas d'une collision particulièrement violente, elle s'écrase et l'entretoise fléchisse vers le haut.
